# EUROPEAN PATENT SPECIFICATION

(11) **EP 0 590 988 B1**
(45) Date of publication and mention of the grant of the patent: **02.07.1997**
(21) Application number: 93307785.1
(22) Date of filing: 30.09.1993
(51) Int. Cl.: C08F 8/00, C08F 6/02, C08J 3/24

(54) **Process for producing crosslinked polymer containing carboxyl group**
Verfahren zur Herstellung von Carboxylgruppen enthaltende vernetzte Polymere
Procédé de préparation de polymères réticulés contenant des groupes carboxyliques

(30) Priority: 01.10.1992 JP 263466/92
(43) Date of publication of application: 06.04.1994
(73) Proprietor: SUMITOMO SEIKA CHEMICALS CO., LTD., Kako-gun Hyogo-ken (JP)
(72) Inventor: Fujikake, Masato, c/o Sumitomo Seika Chem. Co. Ltd, Himeji-shi, Hyogo-ken (JP); Kobayashi, Shinji, c/o Sumitomo Seika Chem. Co.Ltd, Himeji-shi, Hyogo-ken (JP); Hamamoto, Shigeki, c/o Sumitomo Seika Chem. Co.Ltd, Himeji-shi, Hyogo-ken (JP); Tabata, Mitsutaka, c/o Sumitomo Seika Chem. Co.Ltd, Himeji-shi, Hyogo-ken (JP); Nakamura, Morio, c/o Sumitomo Seika Chem. Co., Ltd, Himeji-shi, Hyogo-ken (JP)
(74) Representative: Coleiro, Raymond

(56) References cited:
- EP-A- 0 239 035
- DE-A- 2 017 451
- DE-A- 4 127 814

## Description

The present invention relates to a process for producing a powdered crosslinked polymer containing carboxyl groups which is suitable for use as a thickener of various aqueous solutions.

Powdered crosslinked polymers containing carboxyl groups which are water insoluble and suitable for water absorption, for example, as in tissues, are disclosed in DE-A-4127814. They are prepared by polymerization of water soluble monomers from an aqueous solution or by a suspension polymerization process to obtain a hydrogel. At some stage after formation of the hydrogel, each of a reducing agent and a radical scavenger is added in order to reduce the residual content of monomer and of water-soluble components.

On the other hand, powdered crosslinked polymers containing carboxyl groups (hereinafter sometimes referred to as crosslinked polymers) are known which are characterized in that they can be rendered soluble in water and exhibit extremely high viscosity even in low concentrations by neutralizing them with appropriate bases and form plastic fluids with a high yield value. They have been used in various fields on the basis of these special flow properties. For example, they have been used in industrial fields as solid suspension stabilizers (e.g. , in gypsum and other cements), thickeners (e.g. in water-soluble paints and emulsion paints), pastes (e.g. in printing pastes in the textile industry); in the field of cosmetics and toiletries in creams, lotions, shampoos and dentifrices on the basis of their thickening and suspension stabilizing properties; and in the pharmaceutical field, for example, in ointments and tablets.

Such crosslinked polymers have been produced by known methods, for example, by copolymerization of an α,β-unsaturated carboxylic acid such as acrylic acid and a monomer having at least two ethylenic unsaturated groups such as polyallyl ethers of sucrose (US-A-2923692), hexaallyltrimethylene trisulfone (US-A-2958679) and triallyl phosphate (US-A-3426004), followed by drying, for example, in an air circulating oven (US-A-3426004); or by copolymerization of an α,β-unsaturated carboxylic acid such as acrylic acid and a polymerizable monomer having a glycidyl group such as glycidyl methacrylate (JP-A-58-84819), followed by heating.

When these crosslinked polymers are used as thickeners for various solutions, the higher viscosity the crosslinked polymers exhibit, the more various uses they have. Further, desired thickening effects can be obtained even by using a smaller amount of them. The crosslinked polymers thus have high commercial value.

However, the crosslinked polymers obtained by these known methods do not have entirely satisfactory properties.

The present invention seeks to provide an industrially advantageous process for producing a crosslinked polymer containing carboxyl groups having high viscosity and excellent flow properties.

With the above considerations in mind, we have intensively studied processes for producing crosslinked polymers containing carboxyl groups which have high viscosity and excellent flow properties in comparison with known crosslinked polymers. As a result, it has been found that a crosslinked polymer having the above excellent viscosity properties can be obtained by (a) polymerization in an inert solvent, (b) heating the resulting slurry in the presence of a radical scavenger, and then (c) removing the solvent.

That is, according to the present invention, there is provided a process for producing a crosslinked polymer containing carboxyl groups which comprises (a) polymerizing, as monomer components, an α,β-unsaturated carboxylic acid and a crosslinking agent copolymerizable with it, in the presence of a radical polymerization catalyst in an inert solvent selected from halogenated hydrocarbons, aliphatic hydrocarbons, alicyclic hydrocarbons and aromatic hydrocarbons and in which the monomer components are soluble but the resultant polymer product is insoluble, thereby to form a suspension of the polymer product in the solvent, (b) heating the suspension of the polymerized product in the inert solvent in the presence of a radical scavenger and (c) removing the solvent.

Preferred embodiments of the invention will now be described.

The inert solvent which can be used is one which dissolves the monomer but does not dissolve the polymer obtained, namely an inert solvent selected from halogenated hydrocarbons (e.g., ethylene dichloride or chlorobenzene), aliphatic hydrocarbons (e.g., n-pentane, n-hexane, isohexane, n-heptane, n-octane or isoctane), alicyclic hydrocarbons (e.g, cyclopentane, methylcyclopentane, cyclohexane or methylcyclohexane) and aromatic hydrocarbons (e.g., benzene, toluene or xylene). Among these inert solvents, ethylene dichloride, benzene and n-hexane are advantageously used because they have a stable quality and are readily available.

Examples of the α,β-unsaturated carboxylic acid to be used in the invention are acrylic acid, methacrylic acid, crotonic acid, maleic acid, itaconic acid, fumaric acid and other olefinic unsaturated carboxylic acids. These α,β-unsaturated carboxylic acids can be used alone or as a mixture of two or more of them. Among them, acrylic acid is particularly preferred because it is cheap and readily available and gives polymers with excellent properties.

The radical polymerization catalyst is suitably α,α'-azobisisobutyronitrile, 2,2'-azobis-2,4-dimethylvaleronitrile, dimethyl-2,2'-azobisisobutyrate, benzoyl peroxide, lauroyl peroxide, cumene hydroperoxide tert-butyl hydroperoxide. The amount of the radical polymerization catalyst to be used varies depending upon the kind and the temperature of use. It is normally 0.1 to 10% by weight, preferably 0.3 to 3% by weight based on the total amount of the α,β-unsaturated carboxylic acid and the crosslinking agent. When the catalyst is used in excess, the polymerization proceeds extremely rapidly and removal of the reaction heat becomes difficult, and it is difficult to maintain the desired reaction temperature. When the amount of the catalyst used is too small, the polymerization is not economically performed because the reaction rate becomes too low.

Any crosslinking agent may be used in the invention so long as it is capable of crosslinking with the α,β-unsaturated carboxylic acid and is capable of dissolving in the above solvent. Thus, it may be a monomer having at least two ethylenic unsaturated groups or a monomer having at least one epoxy group and at least one ethylenic unsaturated group. Examples of the crosslinking agent include acrylic acid esters of polyols, methacrylic acid esters of polyols and allyl ethers of polyols each of which has hydroxyl groups as at least two substituents. Examples of the above polyols include ethylene glycol, propylene glycol, polyoxyethylene glycol, polyoxypropylene glycol, glycerin, polyglycerin, trimethylolpropane, pentaerythritol, sucrose and sorbitol. In addition, the crosslinking agents include diallyl phthalate, triallyl phosphate, allyl methacrylate, tetraallyloxyethane, triallyl cyanurate, divinyl adipate, vinyl crotonate, 1,5-hexadiene, divinylbenzene, glycidyl methacrylate and allyl glycidyl ether. Among them, pentaerythritol tetraallyl ether, polyallylsucrose, triallyl phosphate or tetraallyloxyethane gives more preferred results.

Of course, the thickening properties of the crosslinked polymer varies depending upon the kind of crosslinking agent and other conditions. The amount of the monomer having at least two ethylenic unsaturated groups or the monomer having at least one epoxy group and at least one ethylenic unsaturated group is preferably in the range of 0.05 to 10% by weight, more preferably 0.1 to 3% by weight based on the α,β-unsaturated carboxylic acid. The optimum amount to be added is determined in dependence upon various conditions and desired results. When the crosslinking agent is added in excess, a larger proportion of three-dimensional polymer is formed and insoluble gels are sometimes formed. When the amount added is too small, the crosslinking agent does not exhibit its effect and gives liquid properties similar to those achieved in its absence.

Any radical scavenger can be used in the invention so long as it is capable of inhibiting radical chain reaction. Examples thereof include hydroquinone, methylhydroquinone, methoxyhydroquione, 2,5-di-tert-butylhydroquinone, catechol, pyrogallol, resorcin, methyl p-hydroxybenzoate, dibutylhydroxytoluene, butylhydroxyanisole and oxygen. When dibutylhydroxytoluene, butylhydroxyanisole, methoxyhydroquinone or oxygen is used, preferred results are obtained.

When oxygen is used, care should be taken to use it in an oxygen concentration below the limit of inflammability of the inert solvent. For example, oxygen gas diluted with nitrogen gas to a given concentration may, therefore, be bubbled into the resulting slurry. The oxygen concentration in the gas to be used is preferably from 1% oxygen by volume up to the concentration limit determined by inflammability of the inert solvent. When the oxygen concentration is below 1% by volume, pronounced effects are not obtained.

When radical scavengers other than oxygen are used, the amount to be used varies depending upon the kind of radical scavenger and other conditions and is preferably in the range of 0.05 to 5% by weight, more preferably 0.1 to 2% by weight based on the α,β-unsaturated carboxylic acid. When the amount is too small, no effect is obtained.

These radical scavengers may be added in a given amount just before the drying step to the slurry formed after completion of the polymerization, or may be added successively in the drying step.

On the other hand, when oxygen is used, the heating and drying may be carried out while bubbling oxygen diluted to a given concentration with nitrogen into the slurry. Thus, good results are obtained.

The detailed mechanism of action by which the use of a radical scavenger gives polymers having the desired effects, namely polymers which have excellent suspension stabilizing effect and are suitable for use as a thickening agent, is not entirely clear. It is speculated, however that formation of a low molecular weight polymer, during the drying step, resulting from reaction of a trace amount of α,β-unsaturated carboxylic acid and crosslinking agent both remaining in the slurry after completion of the polymerization is inhibited by the radical scavenger. In addition, formation of excessively crosslinked polymer is also inhibited. As a result, a moderately crosslinked polymer can be obtained in high purity without formation of low molecular weight polymers.

In a preferred process embodying the present invention, the crosslinked polymer is prepared as follows.

The α,β-unsaturated carboxylic acid, crosslinking agent, polymerization catalyst and solvent are placed in a reaction vessel equipped with a stirrer, thermometer, inlet pipe for nitrogen and cooling pipe. In this case, the amount of raw material (i.e. all materials other than solvent) for the polymerization is suitably in the range of not more than 20% by weight, preferably 5 to 15% by weight based on the total weight of the above materials to be used. When it exceeds 20% by weight, a large amount of the deposit of the polymer forms as the polymerization proceeds, and, at the same time, stirring the reaction mixture homogeneously becomes difficult. When it is less than 5% by weight, the preparation is not economically performed.

Thereafter, nitrogen gas is bubbled into the solution to remove oxygen in the upper part in the reaction vessel and oxygen dissolved in the raw material (i.e. all materials other than solvent) and solvent. The polymerization reaction is initiated by heating on a warm bath or the like to a given temperature in the range of 20 to 120°C, preferably 30 to 90°C. The reaction system changes from an initial homogeneous solution to a white slurry.

Further, separately from the above method, the crosslinking agent can be added successively to the polymerization system as the polymerization of the α,β-unsaturated carboxylic acid proceeds.

After completion of the polymerization, the inert solvent is removed by drying under heating, preferably at 50°C to 160°C, more preferably 70°C to 130°C, while bubbling nitrogen gas containing oxygen into the resulting slurry, or after adding a radical scavenger other than oxygen.

When the heating temperature is lower than 50°C, it takes a long time to remove the solvent. A heating temperature higher than 160°C is also not preferred because the desired polymer cannot be obtained economically and heat deterioration of the polymer may be caused.

The crosslinked polymer obtained by the above method may be dissolved in a large amount of water, and the carboxyl groups in the polymer neutralized with an appropriate base to pH 7. Thereby the aqueous solution exhibits maximum viscosity. The desired viscosity can be obtained by using the crosslinked polymer in a low concentration of not more than 1% in water. This prominent thickening effect is an important characteristic of a polymer prepared by a process of the present invention.

As the neutralizing agent, any known base can be used. For example, inorganic bases such as sodium hydroxide, potassium hydroxide, sodium carbonate, potassium carbonate and ammonium hydroxide, as well as organic bases such as triethanolamine and triethylamine can be used.

As described above, using a process embodying the present invention, it is possible to provide, in an industrially advantageous manner, a polymer which has high viscosity and excellent flowing properties in comparison with known crosslinked polymers containing carboxyl groups and has various uses. Such a process may therefore contribute largely to the development of industrial polymer thickeners.

Preferred embodiments of the invention will now be described in more detail with reference to the following Examples.

### Example 1

Crosslinked polymers of acrylic acid were Prepared using ethylene dichloride as the inert solvent, azobisisobutyronitrile (hereinafter referred to as AIBN) as the radical polymerization catalyst and pentaerythritol tetraallyl ether in varying amounts as the crosslinking agent.

In each case, the above solvent was previously placed in a 500 ml four necked flask, the following respective amounts of the α,β-unsaturated carboxylic acid, crosslinking agent and radical polymerization catalyst were then introduced and the polymerization was carried out.

| | |
|---|---|
| Acrylic acid | 30 g |
| Pentaerythritol tetraallyl ether (*1) | 0.42, 0.45, 0.48 g |
| AIBN | 0.1 g |
| Ethylene dichloride | 340 ml |

| | |
|---|---|
| (*1) Synthesized according to U.S. Patent No. 3,428,693. | |

The reaction was carried out for 3 hours with stirring at 55°C to 65°C under an atmosphere of nitrogen, and the reaction mixture was maintained for 30 minutes under reflux with ethylene dichloride.

Then, while bubbling nitrogen gas containing oxygen (oxygen concentration: 3% by volume) at a flow rate of 20 ml/min into the slurry formed after completion of the polymerization reaction, the slurry was heated to about 110°C and maintained at this temperature for a further 30 mins to effect drying.

Thus, the crosslinked polymers (about 30 g) of acrylic acid was obtained in the form of white fine powders. Table 1 shows the viscosities of respective 0.5% by weight aqueous solutions of the crosslinked polymers.

### (Measurement of the viscosity)

The crosslinked polymer of acrylic acid was dispersed in ion-exchange water and neutralized to pH 7 with an aqueous solution of sodium hydroxide to prepare a viscous aqueous solution of a concentration of 0.5% by weight. The viscosity of this solution was measured with a Brookfield type viscometer at 25°C and 20 rpm.

**Table 1**

| Example 1 | Crosslinking agent | Amount added (g) | Viscosity (CPS) (Pa.s) |
|---|---|---|---|
| (A) | Pentaerythritol tetraallyl ether | 0.42 | 45000 (45) |
| (B) | " | 0.45 | 50000 (50) |
| (C) | " | 0.48 | 51000 (51) |

### Comparative Examples 1 and 2

Crosslinked polymers of acrylic acid were prepared under the same conditions as those in Example 1 (A) and (B) respectively, except that nitrogen gas (purity: 99.99%) was used in each case instead of using the oxygen containing nitrogen gas bubbled into the formed slurry during the drying step. Polymerization was again carried out to obtain respective crosslinked polymers in the form of white fine powders. The viscosities of the resulting polymers corresponding to those of Example 1 (A) and (B) were 33000 CPS (33 Pa.s) and 38000 CPS (38 Pa.s), respectively.

### Example 2

Crosslinked polymer of acrylic acid were prepared using n-hexane as the inert solvent, AIBN as the radical polymerization catalyst and pentaerythritol tetraallyl ether in varying amounts as the crosslinking agent.

In each case, the above solvent was previously placed in a 500 ml four necked flask, the following respective amounts of α,β-unsaturated carboxylic acid, crosslinking agent and radical polymerization catalyst were then introduced and the polymerization was carried out.

| | |
|---|---|
| Acrylic acid | 30 g |
| Pentaerythritol tetraallyl ether | 0.24, 0.27, 0.30 g |
| AIBN | 0.2 g |
| n-Hexane | 340 ml |

The reaction was carried out for 3 hours with stirring at 55°C to 65°C under an atmosphere of nitrogen, and the reaction mixture was maintained for 30 minutes under reflux with n-hexane.

Then, while bubbling nitrogen gas containing oxygen (oxygen concentration: 3% by volume) at a flow rate of 20 ml/min into the slurry formed after completion of the polymerization reaction, the slurry was heated to about 110°C and maintained at this temperature for a further 30 mins to effect drying.

Thus, the crosslinked polymers (about 30 g) of acrylic acid were obtained in the form of white fine powders. Table 2 shows the viscosities of respective 0.5% by weight aqueous solutions of the crosslinked polymers.

**Table 2**

| Example 2 | Crosslinking agent | Amount added (g) | Viscosity (CPS) (Pa.s) |
|---|---|---|---|
| (A) | Pentaerythritol tetraallyl ether | 0.24 | 47000 (47) |
| (B) | " | 0.27 | 55000 (55) |
| (C) | " | 0.30 | 52000 (52) |

### Comparative Examples 3 and 4

Crosslinked polymers of acrylic acid were prepared under the same conditions as those in Example 2 (A) and (B) respectively except that nitrogen gas (purity: 99.99%) was used in each case instead of using the oxygen containing nitrogen gas bubbled into the formed slurry during the drying step. Polymerization was carried out to give respective crosslinked polymers in the form of white fine powders. The viscosities of the resulting polymers corresponding to those of Example 2 (A) and (B) were 29000 CPS (29 Pa.s) and 33000 CPS (33 Pa.s), respectively.

### Example 3

Polymerization was carried out under the same conditions as those in Example 2 (B). While bubbling nitrogen gas containing varying amounts of oxygen into the resulting slurry, the slurry was heated to about 90°C and maintained at this temperature for a further 30 minutes for drying to give crosslinked polymer of acrylic acid in the form of white fine powder.

Table 3 shows the viscosity of the aqueous solution (0.5% by weight).

**Table 3**

| Example 3 | Oxygen/Nitrogen volume ratio | Viscosity (CPS) (Pa.s) |
|---|---|---|
| (A) | 1/99 | 48000 (48) |
| (B) | 3/97 | 55000 (55) |
| (C) | 5/95 | 56000 (56) |

### Example 4

Polymerization was carried out under the same conditions as those in Example 2 (B). Different kinds of radical scavengers (each 0.2 g) were added to the resulting slurry. Then, while bubbling nitrogen gas (purity: 99.99%), the slurry was heated at 110°C and maintained at this temperature for a further 30 minutes for drying to give crosslinked polymers of acrylic acid in the form of respective white fine powders.

Table 4 shows the viscosities of respective aqueous solutions (0.5% by weight).

**Table 4**

| Example 4 | Radical scavenger | Amount added (g) | Viscosity (CPS) (Pa.s) |
|---|---|---|---|
| (A) | Methoxyhydroquinone | 0.2 | 51000 (51) |
| (B) | Dibutylhydroxytoluene | 0.2 | 47000 (47) |
| (C) | p-tert-butyl-catechol | 0.2 | 50000 (50) |

### Example 5

Polymerization was carried out under the same conditions as those in Example 2 using n-heptane as the inert solvent and using tetraallyloxyethane as the crosslinking agent.

Then methoxyhydroquinone in varying amounts was added to the resulting slurry. While bubbling nitrogen gas (purity: 99.99%), the slurry was heated to 110°C and maintained at this temperature for a further 30 minutes for drying to give respective crosslinked polymers of acrylic acid in the form of white fine powders.

| | |
|---|---|
| Acrylic acid | 30.0 g |
| Tetraallyloxyethane | 0.27 g |
| AIBN | 0.2 g |
| n-Heptane | 340 ml |

Table 5 shows the viscosities of respective aqueous solutions (0.5% by weight).

**Table 5**

| Example 5 | Radical scavenger | Amount added (g) | Viscosity (CPS) (Pa.s) |
|---|---|---|---|
| (A) | Methoxyhydroquinone | 0.02 | 40000 (40) |
| (B) | " | 0.1 | 46700 (46.7) |
| (C) | " | 0.3 | 47200 (47.2) |

### Comparative example 5

Polymerization was carried out under the same conditions as those in Example 5, but without adding methoxyhydroquinone to the resulting slurry. The resulting slurry was subjected to heating and drying to give a crosslinked polymer of acrylic acid in the form of a white fine powder.

The viscosity of an aqueous solution (0.5% by weight) of the resulting polymer was 28000 CPS (28 Pa.s).

### Example 6

A crosslinked polymer of acrylic acid was prepared using n-hexane as the inert solvent, AIBN as the radical polymerization catalyst, and polyallylsucrose as the crosslinking agent.

n-Hexane (320 ml) was previously placed in a 500 ml four necked flask. Acrylic acid (30 g) and AIBN (0.2 g) were then introduced. Polymerization was carried out at 60°C.

After initiation of the polymerization, a mixed solution composed of polyallylsucrose (0.36 g) and n-hexane (20 ml) was added dropwise over about 3 hours. The polymerization was continued for 1 hour after that. Then the mixture was maintained under reflux of n-hexane for 30 minutes.

Then, while bubbling nitrogen gas containing oxygen (oxygen concentration: 3% by volume) at a flow rate of 20 ml/min into the slurry formed after completion of the polymerization reaction, the slurry was heated to about 110°C and maintained at this temperature for a further 30 minutes for drying to give the crosslinked polymer in the form of a white fine powder. The viscosity of an aqueous solution (0.5% by weight) of the polymer was 39000 CPS (39 Pa.s).

### Comparative Example 6

A crosslinked polymer of acrylic acid was prepared under the same conditions as those in Example 6 except that nitrogen gas (purity: 99.99%) was used instead of using the oxygen containing nitrogen gas bubbled into the formed slurry during the heating and drying. Polymerization was carried out to give a crosslinked polymer in the form of a white fine powder. The viscosity of an aqueous solution (0.5% by weight) of the polymer was 22000 CPS (22 Pa.s).

## Claims

1. A process for producing a crosslinked polymer containing carboxyl groups which comprises (a) polymerizing, as monomer components, an α,β-unsaturated carboxylic acid and a crosslinking agent copolymerizable with it, in the presence of a radical polymerization catalyst in an inert solvent selected from halogenated hydrocarbons, aliphatic hydrocarbons, alicyclic hydrocarbons and aromatic hydrocarbons and in which the monomer components are soluble but the resultant polymer product is insoluble, thereby to form a suspension of the polymer product in the solvent, (b) heating the suspension of the polymerized product in the inert solvent in the presence of a radical scavenger and (c) removing the solvent.

2. A process according to claim 1, wherein the α,β-unsaturated carboxylic acid is acrylic acid.

3. A process according to claim 1 or 2, wherein the crosslinking agent is at least one compound selected from pentaerythritol tetraallyl ether, tetraallyloxyethane, triallyl phosphate and polyallylsucrose.

4. A process according to any preceding claim, wherein the radical polymerization catalyst is α,α'-azobisisobutyronitrile.

5. A process according to any preceding claim, wherein the radical scavenger is a compound selected from dibutylhydroxytoluene, butylhydroxyanisole, methoxyhydroquinone and oxygen.

## Patentansprüche

1. Verfahren zur Erzeugung eines vernetzten Polymers mit Carboxy-Gruppen, umfassend (a) die Polymerisation einer α,β-ungesättigten Carbonsäure und eines Vernetzungsmittels, das damit copolymerisierbar ist, als Monomer-Komponenten, in der Gegenwart eines radikalischen Polymerisationskatalysators in einem inerten Lösungsmittel, ausgewählt aus halogenierten, aliphatischen, alicyclischen und aromatischen Kohlenwasserstoffen und worin die Monomer-Komponenten löslich, aber das resultierende Polymerprodukt unlöslich ist, unter Bildung einer Suspension aus dem Polymerprodukt in dem Lösungsmittel, (b) die Erwärmung der Suspension aus dem polymerisierten Produkt in dem inerten Lösungsmittel in der Gegenwart eines Radikalfängers und (c) die Entfernung des Lösungsmittels.

2. Verfahren nach Anspruch 1, worin die α,β-ungesättigte Carbonsäure Acrylsäure ist.

3. Verfahren nach Anspruch 1 oder 2, worin das Vernetzungsmittel zumindest eine Verbindung ist, ausgewählt aus Pentaerythrittetraallylether, Tetraallyloxyethan, Triallylphosphat und Polyallylsucrose.

4. Verfahren nach einem der vorhergehenden Ansprüche, worin der radikalische Polymerisations-Katalysator α,α'-Azobisisobutyronitril ist.

5. Verfahren nach einem der vorhergehenden Ansprüche, worin der Radikalfänger eine Verbindung ist, ausgewählt aus Dibutylhydroxytoluol, Butylhydroxyanisol, Methoxyhydrochinon und Sauerstoff.

## Revendications

1. Procédé de préparation d'un polymère réticulé contenant des groupes carboxyliques, qui comprend les étapes consistant (a) à polymériser, en tant que composants monomériques, un acide carboxylique α,β-insaturé et un agent de réticulation copolymérisable avec lui, en présence d'un catalyseur de la polymérisation radicalaire, dans un solvant inerte choisi parmi les hydrocarbures halogénés, les hydrocarbures aliphatiques, les hydrocarbures alicycliques et les hydrocarbures aromatiques, et dans lequel les composants monomères sont solubles mais le produit polymère résultant est insoluble, pour former, de cette façon, une suspension du produit polymère dans le solvant, (b) à chauffer la suspension du produit polymérisé dans le solvant inerte en présence d'un composé capteur de radicaux et (c) à éliminer le solvant.

2. Procédé conformément à la revendication 1, dans lequel l'acide carboxylique α,β-insaturé est l'acide acrylique.

3. Procédé conformément à la revendication 1 ou 2, dans lequel l'agent de réticulation est au moins un composé choisi parmi l'éther tétraallylique de pentaérythritol, le tétraallyloxyéthane, le phosphate triallylique et le polyallylsaccharose.

4. Procédé conformément à l'une quelconque des revendications précédentes, dans lequel le catalyseur de la polymérisation radicalaire est l'α,α'-azobisisobutyronitrile.

5. Procédé conformément à l'une quelconque des revendications précédentes, dans lequel le composé capteur de radicaux est un composé choisi parmi le dibutylhydroxytoluène, le butylhydroxyanisole, la méthoxyhydroquinone et l'oxygène.
